# EUROPEAN PATENT SPECIFICATION

(11) **EP 2 706 533 B1**
(45) Date of publication and mention of the grant of the patent: **02.05.2018**
(21) Application number: 13183582.9
(22) Date of filing: 09.09.2013
(51) Int. Cl.: G21C 15/18, G21D 1/02

(54) **Method and system for external alternate suppression pool cooling for a BWR**
Verfahren und System zur externen alternativen Kondensationsbeckenkühlung für Siedewasserreaktoren
Procédé et système de refroidissement de piscine à suppression alternée externe pour réacteurs à eau bouillante

(30) Priority: 11.09.2012 US 201213609926
(43) Date of publication of application: 12.03.2014
(73) Proprietor: GE-Hitachi Nuclear Energy Americas LLC, Wilmington, NC 28401 (US)
(72) Inventor: Ginsberg, Robert Joseph, Wilmington, NC 28401 (US); Anderson, Edward C., Wilmington, NC 28401 (US)
(74) Representative: Williams, Andrew Richard

(56) References cited:
- JP-A- S5 465 296
- JP-A- H02 251 795
- US-A- 5 087 408

## Description

### BACKGROUND OF THE INVENTION

### Field of the Invention

Example embodiments relate generally to nuclear reactors, and more particularly to an external alternate cooling system of the suppression pool for a Boiling Water Nuclear Reactor (BWR). The cooling system may provide emergency cooling of the suppression pool without breaching any primary containment boundaries.

### Related Art

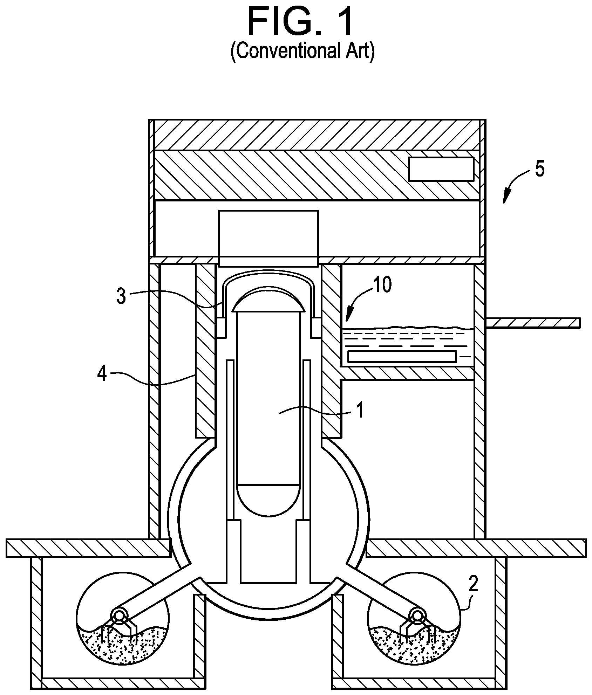

FIG. 1 is a cut-away view of a conventional boiling water nuclear reactor (BWR) reactor building 5. The suppression pool 2 is a torus shaped pool that is part of the reactor building primary containment. Specifically, the suppression pool 2 is an extension of the steel primary containment vessel 3, which is located within the shell 4 of the reactor building 5. The suppression pool 2 is positioned below the reactor 1 and spent fuel pool 10, and is used to limit containment pressure increases during certain accidents. In particular, the suppression pool 2 is used to cool and condense steam released during plant accidents. For instance, many plant safety / relief valves are designed to discharge steam into the suppression pool 2, to condense the steam and mitigate undesired pressure increases. Conventionally, a BWR suppression pool 2 is approximately 43 m (140 feet) in total diameter (i.e., plot plan diameter), with a 9 m (30 foot) diameter torus shaped shell. During normal operation, the suppression pool 2 usually has suppression pool water in the pool at a depth of about 4.5 m (15 feet) (with approximately 3785 m³ ( 1,000,000 gallons) of suppression pool water in the suppression pool 2, during normal operation).

The pool 2 is conventionally cleaned and cooled by the residual heat removal (RHR) system of the BWR plant. During normal (non-accident) plant conditions, the RHR system can remove water from the suppression pool 2 (using conventional RHR pumps) and send the water through a demineralizer (not shown) to remove impurities and some radioactive isotopes that may be contained in the water. During a plant accident, the RHR system is also designed to remove some of the suppression pool water from the suppression pool 2 and send the water to a heat exchanger (within the RHR system) for cooling.

During a serious plant accident, normal plant electrical power may be disrupted. In particular, the plant may be without normal electrical power to run the conventional RHR system and pumps. If electrical power is disrupted for a lengthy period of time, water in the suppression pool may eventually boil and impair the ability of the suppression pool to condense plant steam and reduce containment pressure.

In a plant emergency, use of the RHR system may cause highly radioactive water (above acceptable design limits) to be transferred between the suppression pool and RHR systems (located outside of primary containment). The transfer of the highly radioactive water between the suppression pool and RHR system may, in and of itself, cause a potential escalation in leakage of harmful radioactive isotopes that may escape the suppression pool. Additionally, radiation dosage rates in areas of the RHR system could be excessively high during an accident, making it difficult for plant personnel to access and control the system.

### SUMMARY OF INVENTION

Example embodiments provide a system for externally cooling the suppression pool for a Boiling Water Nuclear Reactor (BWR). The system may provide external cooling for the suppression pool, without breaching primary containment and without the need for normal plant electrical power. The cooling system may be operated and controlled from a remote location to protect the safety of plant personnel during a plant emergency. Example embodiments also include a method of making the system.

### BRIEF DESCRIPTION OF THE DRAWINGS

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a cut-away view of a conventional boiling water nuclear reactor (BWR) reactor building;
FIG. 2 is an overhead view of an external cooling system, in accordance with an example embodiment; and
FIG. 3 is a flowchart of a method of making an external cooling system, in accordance with an example embodiment.

### DETAILED DESCRIPTION

Detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it may be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

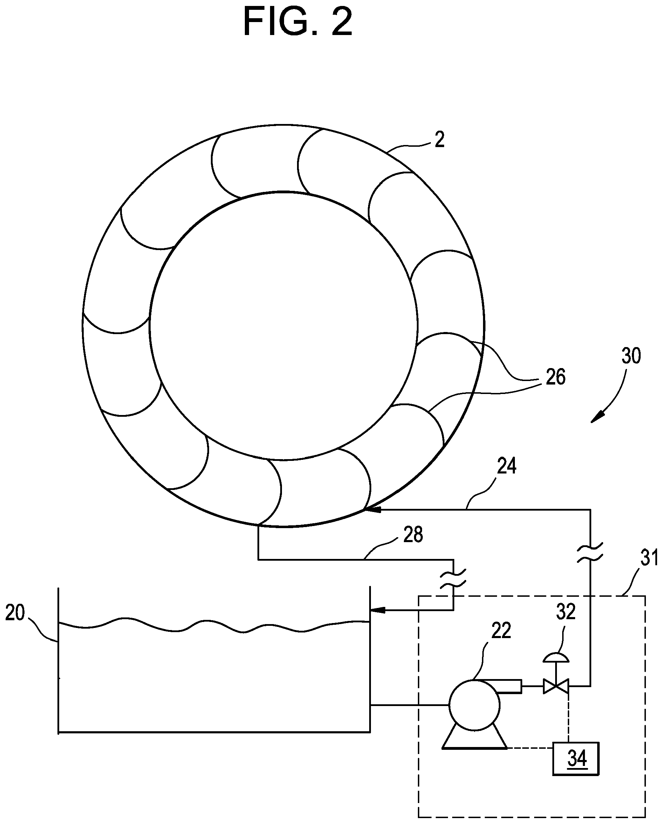

FIG. 2 is an overhead view of an external cooling system 30, in accordance with an example embodiment. The external cooling system 30 may include cooling coils 26 wrapped around the suppression pool 2 and fluidly coupled to a heat sink 20 that provides external cooling for the suppression pool 2. The cooling coils 26 may be a flexible coil, branched tubing, a blanket, or any other apparatus that increases a surface area (for maximum heat transfer) between the outer shell of the suppression pool 2 and the coil 26. The cooling coils 26 may be flexible to allow the coil 26 to form around the shape of the suppression pool 2 to maximize the direct exposure between the coils 26 and the suppression pool 2 outer surface.

The heat sink 20 may be a large, man-made or natural body of water. Liquid in the heat sink 20 may be water, or any other liquid fluid with a high heat capacity capable of optimizing heat exchange with the suppression pool 2. The cooler the liquid is in the heat sink 20, the more efficient the external cooling system 30 will be in cooling the suppression pool 2. The heat sink 20 may be fluidly coupled to the cooling coils 26 via pipes or tubing 24 / 28. Specifically, a pump 22 (connected to the heat sink 20) may discharge cool water from the heat sink 20 through a cool water inlet pipe 24 and into the cooling coils 26 wrapped around the suppression pool 2. A warm water outlet pipe 28 may discharge warm water from the cooling coils 26 back to the heat sink 20 (or, the water may alternatively be discharged to another location other than the heat sink 20).

Operation and controls of the external cooling system 30 may be positioned in a remote location 31 (relative to the suppression pool 2), to protect plant personnel from exposure to primary containment during a plant accident. Specifically, the pump 22 (and/or a controller 34 used to operate the pump 22) may be located in the remote location. Likewise, a control valve 32 (and/or a controller 34 used to operate the valve 32) for controlling a flow of water through the cooling coils 25 (and opening and closing the inlet pipe 24) may also be located in the remote location 31.

The pump 22 may be operated by a diesel generator, or directly by a mechanical engine, such that the operation of the pump need not rely on normal plant electrical power (which is ideal, during a plant emergency). Alternative to the pump 22, the heat sink 20 may be located at an elevation that is above the suppression pool 2, allowing cool water from the heat sink 20 to gravity drain through the cooling coils 26 without the need for any electrical power (although this configuration has the drawback of not being able to drain the warm water from outlet pipe 28 back into the heat sink 20).

The system 30 may operate to cool the suppression pool without the need for breaching (i.e., penetrating) the integrity of the suppression pool 2 and/or any primary containment structure. The system 30 also operates without displacing water from the suppression pool 2 or otherwise removing potentially contaminated water from containment.

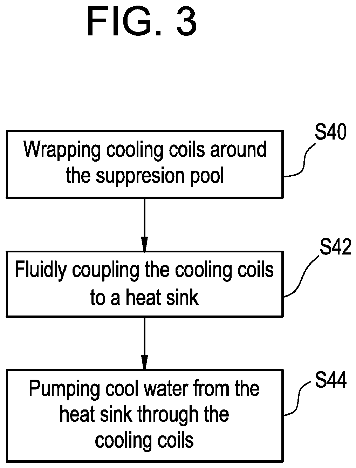

FIG. 3 is a flowchart of a method of making an external cooling system 30, in accordance with an example embodiment. Specifically, step S40 may include wrapping a cooling coil or coils 26 around an outer surface of the suppression pool 2 (see FIG. 2). Step S42 may include fluidly coupling the cooling coils 26 to a heat sink 20. This may be accomplished by connecting inlet and outlet pipes 24/28 to the cooling coils 26 surrounding the suppression pool 2. Step S44 may include pumping cooling water from the heat sink through the cooling coils 26, via the use of a pump 22 (or, alternatively, via gravity draining).

Example embodiments having thus been described, it will be obvious that the same may be varied in many ways. Such variations are not to be regarded as a departure from the scope of example embodiments, and all such modifications as would be obvious to one skilled in the art are intended to be included within the scope of the following claims.

## Claims

1. An external cooling system (30), comprising:
a suppression pool (2) for a nuclear reactor;
cooling coils (26) contacting an outer surface of the suppression pool; and
a heat sink (20) fluidly coupled to the cooling coils to provide a flow of cooling fluid through the cooling coils.

2. The external cooling system of claim 1, wherein the cooling coils (26) are wrapped around the suppression pool.

3. The external cooling system of claim 1 or claim 2, further comprising:
a pump (22), fluidly coupled to the heat sink; and
an inlet pipe connecting the pump to the cooling coils to provide the flow of cooling fluid through the cooling coils.

4. The external cooling system of any preceding claim, further comprising:
an outlet pipe connected to the cooling coils to discharge warm water from the cooling coils back to the heat sink.

5. The external cooling system of claim 3, wherein the pump is driven by a diesel generator.

6. The external cooling system of any preceding claim, further comprising:
a control valve in the inlet pipe.

7. The external cooling system of claims 3 to 6, further comprising a controller for controlling at least one of the pump and the control valve, the controller being positioned in a remote location relative to the suppression pool.

8. The external cooling system of any preceding claim, wherein the system does not breach the suppression pool.

9. The external cooling system of any preceding claim, wherein the heat sink is one of a man-made or natural body of water.

10. A method of making an external cooling system, comprising:
contacting an outer surface of a suppression pool for a nuclear reactor with cooling coils; and
fluidly coupling a heat sink to the cooling coils.

11. The method of claim 10, further comprising:
flowing cooling fluid from the heat sink through the cooling coils.

12. The method of claim 10 or claim 11, wherein the contacting an outer surface of the suppression pool with cooling coils includes wrapping the cooling coils around the suppression pool.

13. The method of any of claims 10 to 12, further comprising:
connecting an inlet pipe to the heat sink and the cooling coils; and
inserting a pump in the inlet pipe,
the flowing of the cooling fluid from the heat sink through the cooling coils includes pumping the cooling fluid through the inlet pipe to the cooling coils using the pump.

14. The method of any of claims 10 to 13, further comprising:
connecting an outlet pipe to the cooling coils and the heat sink; and
draining the cooing fluid from the cooling coils to the heat sink using the outlet pipe.

15. The method of any of claims 10 to 14, wherein the pump is driven by one of a diesel generator and a mechanical engine.

## Patentansprüche

1. Externes Kühlsystem (30), umfassend:
ein Kondensationsbecken (2) für einen Kernreaktor;
Kühlschlangen (26), die eine Außenfläche des Kondensationsbeckens berühren; und
ein Kühlblech (20), das flüssigkeitsgemäß mit den Kühlschlangen gekoppelt ist, um einen Fluss von Kühlflüssigkeit durch die Kühlschlangen bereit zu stellen.

2. Externes Kühlsystem nach Anspruch 1, wobei die Kühlschlangen (26) um das Kondensationsbecken herumgewickelt sind.

3. Externes Kühlsystem nach Anspruch 1 oder Anspruch 2, des Weiteren umfassend:
eine Pumpe (22), die flüssigkeitsgemäß mit dem Kühlblech gekoppelt ist; und
ein Einlassrohr, das die Pumpe mit den Kühlschlangen verbindet, um einen Fluss von Kühlflüssigkeit durch die Kühlschlangen bereit zu stellen.

4. Externes Kühlsystem nach einem der vorstehenden Ansprüche, des Weiteren umfassend:
ein Auslassrohr, das mit den Kühlschlangen verbunden ist, um warmes Wasser von den Kühlschlangen zurück zum Kühlblech abzuleiten.

5. Externes Kühlsystem nach Anspruch 3, wobei die Pumpe von einem Dieselgenerator angetrieben wird.

6. Externes Kühlsystem nach einem der vorstehenden Ansprüche, des Weiteren umfassend:
ein Regelventil im Einlassrohr.

7. Externes Kühlsystem nach Ansprüchen 3 bis 6, des Weiteren umfassend:
einen Regler zum Steuern von mindestens einem von der Pumpe und dem Regelventil, wobei der Regler an einem abgesetzten Standort im Verhältnis zum Kondensationsbecken positioniert ist.

8. Externes Kühlsystem nach einem der vorstehenden Ansprüche, wobei das System das Kondensationsbecken nicht durchbricht.

9. Externes Kühlsystem nach einem der vorstehenden Ansprüche, wobei das Kühlblech eines von einem handgemachten oder natürlichen Wasserkörper ist.

10. Verfahren zum Herstellen eines externen Kühlsystems, umfassend:
das Berühren einer Außenfläche eines Kondensationsbeckens für einen Kernreaktor mit Kühlschlangen; und
das flüssigkeitsgemäße Koppeln eines Kühlblechs mit den Kühlschlangen.

11. Verfahren nach Anspruch 10, des Weiteren umfassend:
das Fließen der Kühlflüssigkeit vom Kühlblech durch die Kühlschlangen.

12. Verfahren nach Anspruch 10 oder Anspruch 11, wobei das Berühren einer Außenfläche des Kondensationsbeckens mit Kühlschlangen das Herumwickeln der Kühlschlangen um das Kondensationsbecken umfasst.

13. Verfahren nach einem der Ansprüche 10 bis 12, des Weiteren umfassend:
das Verbinden eines Einlassrohrs mit dem Kühlblech und den Kühlschlangen; und das Einsetzen einer Pumpe in das Einlassrohr,
wobei das Fließen der Kühlflüssigkeit vom Kühlblech durch die Kühlschlangen das Pumpen der Kühlflüssigkeit durch das Einlassrohr zu den Kühlschlangen unter Verwenden der Pumpe umfasst.

14. Verfahren nach einem der Ansprüche 10 bis 13, des Weiteren umfassend:
das Verbinden eines Auslassrohrs mit den Kühlschlangen und dem Kühlblech; und
das Ableiten der Kühlflüssigkeit von den Kühlschlangen zum Kühlblech unter Verwenden des Auslassrohrs.

15. Verfahren nach einem der Ansprüche 10 bis 14, wobei die Pumpe von einem Dieselgenerator und einem mechanischen Motor angetrieben wird.

## Revendications

1. Système de refroidissement externe (30), comprenant :
une piscine de suppression (2) pour un réacteur nucléaire ;
des enroulements de refroidissement (26) venant en contact avec une surface externe de la piscine de suppression ; et
un puits de chaleur (20) à couplage fluidique avec les enroulements de refroidissement pour fournir un écoulement de fluide de refroidissement à travers les enroulements de refroidissement.

2. Système de refroidissement externe selon la revendication 1, dans lequel les enroulements de refroidissement (26) sont enroulés autour de la piscine de suppression.

3. Système de refroidissement externe selon la revendication 1 ou la revendication 2, comprenant en outre :
une pompe (22) à couplage fluidique avec le puits de chaleur ; et
un tuyau d'entrée raccordant la pompe aux enroulements de refroidissement pour fournir l'écoulement de fluide de refroidissement à travers les enroulements de refroidissement.

4. Système de refroidissement externe selon l'une quelconque des revendications précédentes, comprenant en outre :
un tuyau de sortie raccordé aux enroulements de refroidissement pour redécharger de l'eau chaude des enroulements de refroidissement vers le puits de chaleur.

5. Système de refroidissement externe selon la revendication 3, dans lequel la pompe est entraînée par un générateur diesel.

6. Système de refroidissement externe selon l'une quelconque des revendications précédentes, comprenant en outre :
une soupape de commande dans le tuyau d'entrée.

7. Système de refroidissement externe selon les revendications 3 à 6, comprenant en outre :
un dispositif de commande pour commander au moins l'une de la pompe et de la soupape de commande, le dispositif de commande étant positionné à un emplacement éloigné par rapport à la piscine de suppression.

8. Système de refroidissement externe selon l'une quelconque des revendications précédentes, dans lequel le système n'ouvre pas de brèche dans la piscine de suppression.

9. Système de refroidissement externe selon l'une quelconque des revendications précédentes, dans lequel le puits de chaleur est un puits de chaleur constitué d'une masse d'eau artificielle ou naturelle.

10. Procédé de fabrication d'un système de refroidissement externe, comprenant :
la mise en contact d'une surface externe d'une piscine de suppression pour un réacteur nucléaire avec des enroulements de refroidissement ; et
le couplage fluidique d'un puits de chaleur avec les enroulements de refroidissement.

11. Procédé selon la revendication 10, comprenant en outre :
l'écoulement de fluide de refroidissement issu du puits de chaleur à travers les enroulements de refroidissement.

12. Procédé selon la revendication 10 ou la revendication 11, dans lequel la mise en contact d'une surface externe de la piscine de suppression avec des enroulements de refroidissement inclut l'enroulement des enroulements de refroidissement autour de la piscine de suppression.

13. Procédé selon l'une quelconque des revendications 10 à 12, comprenant en outre :
le raccordement d'un tuyau d'entrée au puits de chaleur et aux enroulements de refroidissement ; et
l'insertion d'une pompe dans le tuyau d'entrée,
l'écoulement du fluide de refroidissement issu du puits de chaleur à travers les enroulements de refroidissement inclut le pompage du fluide de refroidissement à travers le tuyau d'entrée vers les enroulements de refroidissement en utilisant la pompe.

14. Procédé selon l'une quelconque des revendications 10 à 13, comprenant en outre :
le raccordement d'un tuyau de sortie aux enroulements de refroidissement et au puits de chaleur ; et
le drainage du fluide de refroidissement issu des enroulements de refroidissement vers le puits de chaleur en utilisant le tuyau de sortie.

15. Procédé selon l'une quelconque des revendications 10 à 14, dans lequel la pompe est entraînée par l'un d'un générateur diesel et d'un moteur mécanique.
